# EUROPEAN PATENT APPLICATION

(11) **EP 1 441 208 A1**
(43) Date of publication of application: **28.07.2004**
(21) Application number: 04001096.9
(22) Date of filing: 20.01.2004
(51) Int. Cl.: G01J 1/42

(54) **Mobile UV-intensity indicator and use thereof**

(30) Priority: 24.01.2003 CN 03102950
(71) Applicant: Exon Science Inc., Guei Shan Hsiang&Taoyuan,Taiwan 333 (TW)
(72) Inventor: Su, Wen-Wei, Taoyuan, Taiwan 333 (CN); Chen, Kuei-Hung, Taoyuan, Taiwan 333 (CN); Hsiao, Shun-Hsiang, Taoyuan, Taiwan 333 (CN); Wu, Hsien-Jen, Taoyuan, Taiwan 333 (CN)
(74) Representative: Winkler, Andreas, Dr.

(57) **Abstract**

A mobile UV-intensity indicator is mounted on a vehicle or a portable article. The UV-intensity indicator includes a UV detector and an indicator such as a display and/or an alarm, and warns of overexposure under UV radiation by marking in the display and/or sounding the alarm.

## Description

The present invention relates to a UV-intensity indicator, and more particular to a mobile UV-intensity indicator for use in a vehicle or a portable article.

As being proven medically, UV is harmful to human's skin to a large extent. Unfortunately, due to the destruction of the ozone layer that is supposed to be able to protect people's skin from the direct UV radiation, people are subject to exposure under strong UV radiation. In practice, it is difficult for people to know the intensity of the UV radiation, and thus proper protection measure cannot be adopted timely. Day after day, skin is possibly diseased.

Therefore, the present invention provides a UV-intensity indicator, which accompanies people to indicate UV intensities at all times in all places.

Further, the present invention provides a UV-intensity indicator, which actively warns of high UV intensity.

A first aspect of the present invention relates to a mobile UV-intensity indicator for providing updated UV information for a user. The mobile UV-intensity indicator comprises a UV sensor for receiving UV light and generating an electric signal in response to an intensity of the UV light; and an indicator in communication with the UV sensor, generating an indication signal according to the electric signal.

In one embodiment, the indication signal is a visible signal indicating the intensity of the UV light. The indicator, for example, can be a gauge or a display such as a liquid crystal display (LCD), electro-luminescence (EL) display, vacuum fluorescent display (VFD), light emitting diode (LED), organic light emitting diode (OLED), polymeric light emitting diode (PLED), low-temperature polysilicon liquid crystal display (LTPS-LCD) or seven-segment display.

In one embodiment, the indication signal is a visible signal asserted when a value of the electric signal exceeds a threshold. The indicator can be any kind of visible device which is safe to attract the user's attention, and for example, can be a lightening device, gauge, display, photo-chromic unit or electro-chromic unit.

In one embodiment, the indication signal is an audible signal asserted when a value of the electric signal exceeds a threshold. The indicator can be any kind of audible device which is safe to attract the user's attention, and for example, can be an alarm or a voice or music sounder.

In one embodiment, the indication signal is a tangible signal asserted when a value of the electric signal exceeds a threshold. The indicator can be any kind of a tangible device which is safe to attract the user's attention, and for example, can be a vibrator.

A second aspect of the present invention relates to the use of a mobile UV-intensity indicator in a vehicle.

If the UV sensor is separate from and distant from the indicator, it is preferred that the electric signal is transmitted from the UV sensor to the indicator via a vehicular digital bus.

For example, the vehicular digital bus can be a controller area network (CAN) bus or a vehicle area network (VAN) bus.

The vehicle, for example, can be any kind of transportation tool such as a car, motorcycle, bicycle, boat or plane.

A third aspect of the present invention relates to the use of a mobile UV-intensity indicator in a portable article.

The portable article, for example, can be any kind of portable appliance such as a watch, a pen or a container of sun block, cosmetic or sunglasses.

Preferably, the portable article is an electronic appliance with a built-in display and/or a built-in sounder serving as the indicator of the mobile UV indicator. The electronic appliance, for example, can be a pager, a cellular phone, a personal digital assistant (PDA) or a handheld computer.

The present invention may best be understood through the following description with reference to the accompanying drawings, in which:
Fig. 1 is an output current vs. UV intensity plot of a UV detector;
Fig. 2 is a functional block diagram showing a mobile UV-intensity indicator according to the present invention;
Fig. 3 is a functional block diagram showing a mobile UV-intensity indicator according to a preferred embodiment of the present invention;
Figs. 4A∼4C are schematic diagram exemplifying the indication of UV intensity-associated information on the display of a cellular phone;
Fig. 4D is a schematic diagram exemplifying the indication of UV intensity-associated information by the sounder of a cellular phone;
Fig. 5 is a schematic diagram illustrating the use of the mobile UV indicator according to the present invention with a portable article; and
Fig. 6 is a functional block diagram showing the signal transmission of the mobile UV-intensity indicator of Fig. 3 via a CAN bus.

The present invention will now be described more specifically with reference to the following embodiments. It is to be noted that the following descriptions of preferred embodiments of this invention are presented herein for purpose of illustration and description only; it is not intended to be exhaustive or to be limited to the precise form disclosed.

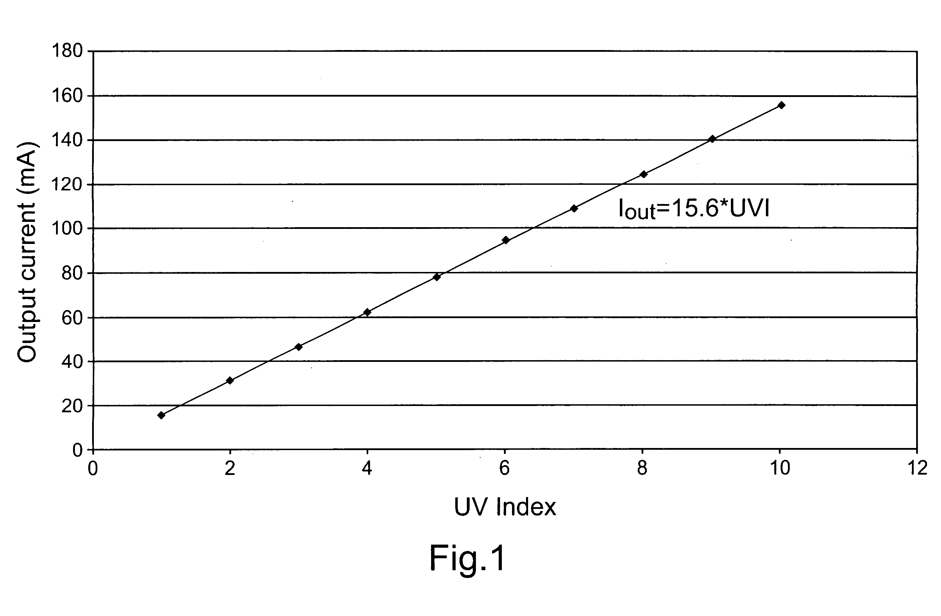

In order to protect people from UV radiation when the UV intensity is too high, a UV sensor is required to realize the UV intensity first. Please refer to Fig. 1 which is an output current vs. UV intensity plot of a UV detector, showing how the UV sensor works. In this figure, the UV intensity is represented by a Solar UV Index. Solar UV Index estimates the average maximum solar ultraviolet radiation (UV) at the Earth's surface. The Index is generally presented as a forecast of the maximum amount of skin-damaging UV expected to reach the Earth's surface at solar noon. The values of the Index range from zero upward and the higher the Index number, the greater the likelihood of skin and eye damaging exposure to UV, and the less time it takes for damage to occur. As shown, the output current of the UV sensor is proportional to the UV intensity. Therefore, the output current data can be used to represent the UV intensity.

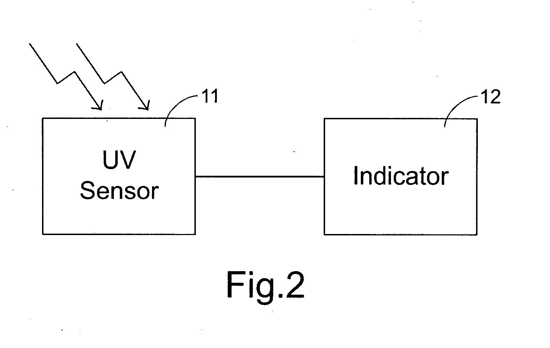

The present invention provides a mobile UV indicator which comprises a UV sensor 11 and an indicator 12, as shown in Fig. 2. Being accompanied by the UV sensor 11, the UV intensity around the host can be realized at any time. Once the UV intensity exceeds threshold, the host can be informed via the indicator 12. For example, the indicator 12 can reveal the UV intensity-related data for the reference of the host, and/or assert a visible, an audible or a tangible signal to the host when the UV intensity is so high as to be possibly harmful to the host.

For revealing a visible signal indicating the intensity of the UV light, a gauge, liquid crystal display (LCD), electro-luminescence (EL) display, vacuum fluorescent display (VFD), light emitting diode (LED), organic light emitting diode (OLED), polymeric light emitting diode (PLED), low-temperature polysilicon liquid crystal display (LTPS-LCD) or seven-segment display can be used as the indicator 12.
For asserting a visible signal when the electric signal outputted by the UV sensor 11 exceeds the threshold, a lightening device, gauge, display, photo-chromic unit or electro-chromic unit can be used as the indicator 12, which changes its color or generate lightening effect to attract the host's attention.

For asserting an audible signal when the electric signal outputted by the UV sensor 11 exceeds the threshold, an alarm or a voice or music sounder can be used as the indicator 12, which makes noise, speaks or plays music to attract the host's attention.

For asserting a tangible signal when the electric signal outputted by the UV sensor 11 exceeds the threshold, a vibrator can be used as the indicator 12.

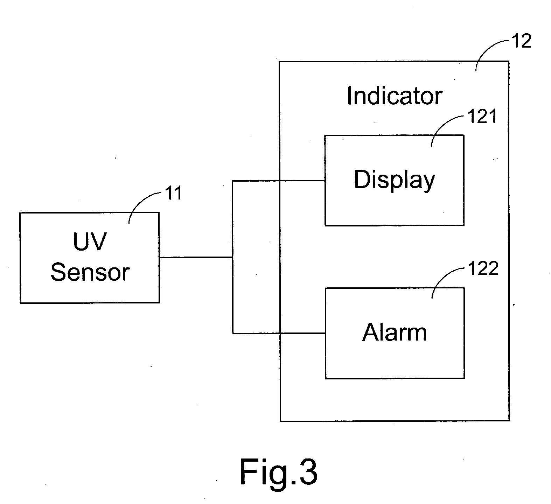

Of course, more than one types of indicators can be used and function at the same time. For example, as illustrated in Fig. 3, the indicator 12 comprises a display 121 and an alarm 122. The electric signal outputted by the UV sensor 11, which varies with the UV intensity received by the UV sensor 11, is transmitted to both of the display 121 and the alarm 122. The display 121 reveals and updates UV intensity information such as Solar UV index at intervals. When the Solar UV index exceeds a harmful threshold, the alarm will sound to inform the host in danger of highly UV exposure.

In another example, the electric signal responding to the UV intensity received by the UV sensor 11, e.g. current signal, is accumulatively calculated, and the alarm 122 sounds when the overall UV amount under which the host is exposed exceeds a threshold.

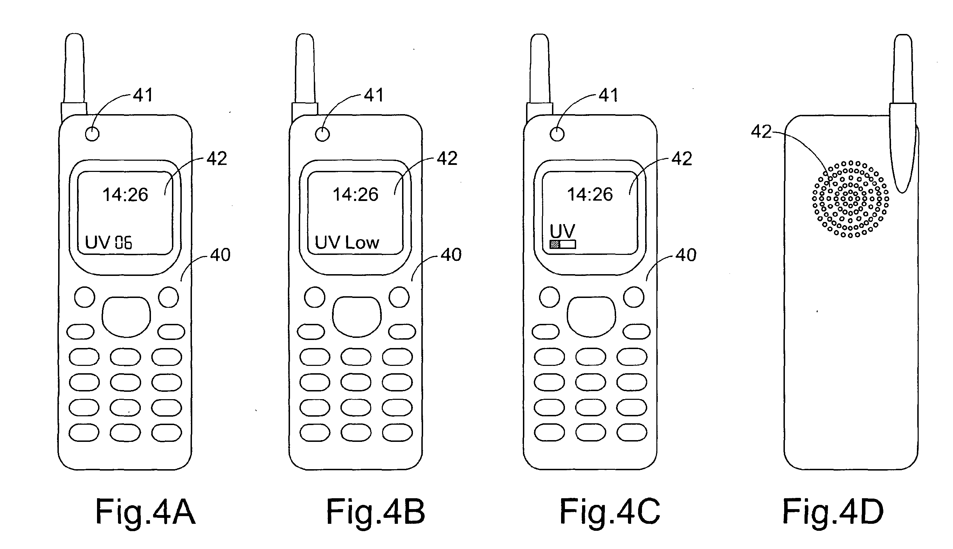

The mobile UV indicator of the present invention can be mounted on a portable article carried by the host. For example, the UV indicator can be mounted on an article that the host uses frequently, such as a watch, a pen, a pager, a cellular phone, a personal digital assistant (PDA), a handheld computer, a container of cosmetic, etc. When the portable article is an electronic appliance with a built-in display and a built-in sounder, such as a pager, a cellular phone, a PDA or a handheld computer, the built-in display can be used in the embodiment of Fig. 3 and functions as the display 121 of the UV indicator 12, and the built-in beeper, ringer or any other suitable kind of sounder can be used as the alarm 122 of the UV indicator 12. Referring to Figs. 4A∼4C, three examples are given to illustrate the indication of UV intensity-associated information on the display of a cellular phone. In Fig. 4A, the UV sensor 41 is mounted on the outer surface of the housing 40 for receiving sunlight and outputting a current signal in response to UV intensity. The current signal is transmitted to the display controller (not shown) of the cellular phone, and the display controller allows the UV intensity-associated information to be shown on the display 42 of the cellular phone along with the date and/or time information. In this example, the UV intensity-associated information is revealed as a Solar UV index, as exemplified in Fig. 4A. In another example shown in Fig. 4B, the UV intensity-associated information is revealed as a literal symbol, e.g. high, medium high, medium, medium low and low. In a further example, the UV intensity-associated information can be revealed as a graphic symbol, e.g. a shaded portion in a hollow bar, as shown in Fig. 4C. Of course, there are many other indication variations can be made under the present conception. Moreover, the aforementioned indication manner can be applied to other portable articles with built-in displays, and is not to be redundantly described herein.

Fig. 4D schematically exemplifies the use of the built-in sounder 43 of the cellular phone as the alarm to warn of the overexposure under UV radiation.

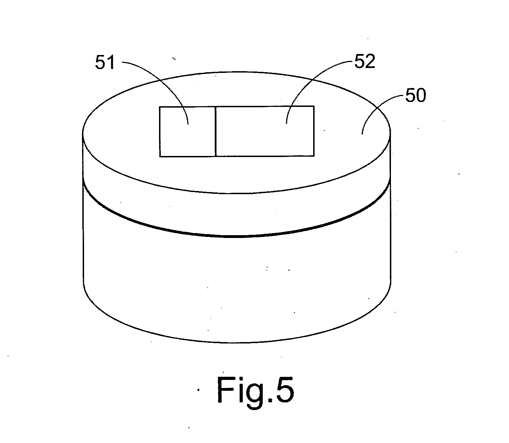

Alternatively, the UV indicator can be mounted on a container of an article that is generally used in sunshine, such as a container of sun block, cosmetic, sunglasses, etc. Fig. 5 illustrates the use of the mobile UV indicator with a portable article. The UV sensor 51 and indicator 52 of the UV indicator is mounted on the outer surface of the container 50 of the portable article so that the host can easily check the UV radiation situation in any place at any time.

The mobile UV indicator of the present invention can also be mounted in a vehicle that the host is seated. The vehicle, for example, can be a car, motorcycle, bicycle, boat or plane. The use of the mobile UV indicator facilitates to prevent the outdoor user from overexposure of UV radiation. Taking a car for example, the UV sensor can be outside the car, e.g. on the forward side of a rearview mirror, and the indicator can be arranged inside the car, e.g. on the rearward side of the rearview mirror. Alternatively, the UV sensor can be mounted at any suitable position that is subject to receive sunlight, e.g. the roof, windscreen or window of the car, and the indicator can be arranged at any other suitable position near the user, e.g. the console, so that the user can easily feel the indication signal.

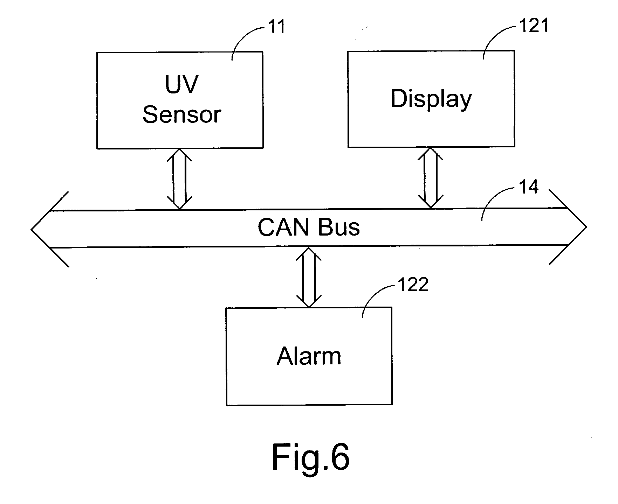

The electric signal outputted by the UV sensor, which is indicative of the UV intensity, can be transmitted to the indicator, especially when the UV sensor and the indictor via cable or wirelessly. Alternatively, a vehicular digital bus such as a controller area network (CAN) or a vehicular area network (VAN) bus can be used to transmit signals among those and other module units in the vehicle. Please refer to Fig. 6. The UV sensor 11, the display 121 and the alarm 122 of the UV indicator of Fig. 3 are all connected to a CAN bus 14. The electric signal outputted from the UV sensor 11 is encoded and outputted to the CAN bus 50, and received and decoded by the display and the alarm to perform required function. The transmission via the vehicular digital bus simplifies the wiring of the vehicle and minimizes the cable amount and vehicle weight as well.

From the above description, it is understood that the mobile UV-intensity indicator according to the present invention can warn of overexposure under UV radiation in a visible, audible and/or tangible way. Accordingly, the host can take necessary step to protect himself.

While the invention has been described in terms of what are presently considered to be the most practical and preferred embodiments, it is to be understood that the invention need not be limited to the disclosed embodiment. On the contrary, it is intended to cover various modifications and similar arrangements included within the spirit and scope of the appended claims which are to be accorded with the broadest interpretation so as to encompass all such modifications and similar structures.

The features disclosed in the foregoing description, in the claims and/or in the accompanying drawings,may, both separately and in any combination thereof, be material for realising the invention in diverse forms thereof.

## Claims

1. A mobile UV-intensity indicator for providing updated UV information for a user, **characterized in that** the mobile UV-intensity indicator comprises:
a UV sensor for receiving UV light and generating an electric signal in response to an intensity of the UV light; and
an indicator in communication with the UV sensor, generating an indication signal according to the electric signal.

2. The mobile UV-intensity indicator according to claim 1 **characterized in that** the indication signal is a visible signal indicating the intensity of the UV light.

3. The mobile UV-intensity indicator according to claim 2 **characterized in that** the indicator is a gauge, liquid crystal display (LCD), electro-luminescence (EL) display, vacuum fluorescent display (VFD), light emitting diode (LED), organic light emitting diode (OLED), polymeric light emitting diode (PLED), low-temperature polysilicon liquid crystal display (LTPS-LCD) or seven-segment display.

4. The mobile UV-intensity indicator according to claim 1 **characterized in that** the indication signal is a visible signal, an audible signal, or a tangible signal asserted when a value of the electric signal exceeds a threshold.

5. The mobile UV-intensity indicator according to claim 4 **characterized in that** the indicator is a lightening device, gauge, display, photo-chromic unit or electro-chromic unit when the indication signal is a visible signal, the indicator is an alarm or a voice or music sounder when the indication signal is an audible signal, and the indicator is a vibrator when the indication signal is a tangible signal.

6. The mobile UV-intensity indicator according to claim 1 **characterized in that** the indicator is used in a vehicle.

7. The mobile UV-intensity indicator according to claim 6 **characterized in that** the electric signal is transmitted from the UV sensor to the indicator via a vehicular digital bus.

8. The mobile UV-intensity indicator according to claim 1 **characterized in that** the indicator is used in a portable article.

9. The mobile UV-intensity indicator according to claim 8 **characterized in that** the portable article is an electronic appliance with a built-in display or a built-in sounder serving as the indicator of the mobile UV indicator.
